Europäisches Patentamt

European Patent Office

Office européen des brevets

(19)

(11) Veröffentlichungsnummer: **0 008 129**
**B1**

(12)

# EUROPÄISCHE PATENTSCHRIFT

(45) Veröffentlichungstag der Patentschrift:
**09.02.83**

(51) Int. Cl.³: **F 16 C 35/077**

(21) Anmeldenummer: **79102952.3**

(22) Anmeldetag: **14.08.79**

(54) **Lagergehäuse.**

(30) Priorität: **15.08.78 US 933858**

(43) Veröffentlichungstag der Anmeldung:
**20.02.80 Patentblatt 80/4**

(45) Bekanntmachung des Hinweises auf die Patenterteilung:
**09.02.83 Patentblatt 83/6**

(84) Benannte Vertragsstaaten:
**DE FR GB IT**

(56) Entgegenhaltungen:
**AT-B-143 908**
**DD-A-102 778**
**DE-U-1 726 080**
**DE-U-1 958 364**
**FR-A-1 034 425**
**US-A-2 377 855**
**US-A-2 397 703**
**US-A-2 443 501**
**US-A-3 120 983**
**US-A-3 147 050**
**US-A-3 520 580**

(73) Patentinhaber: **SKF Industrial Trading & Development
Company B.V., Kelvinbaan 16 P.O. Box 50, NL-3430 AB
Nieuwegein (NL)**

(72) Erfinder: **Schickling, Joseph H., 57 Lakeview drive,
Cherry Hill, New Jersey 08003 (US)**
Erfinder: **Hyduk, Walter, 1060 Woodbourne drive,
Southhampton, PA 18966 (US)**

(74) Vertreter: **Glanz, Werner, SKF Kugellagerfabriken GmbH
Ernst-Sachs-Strasse 2-8, D-8720 Schweinfurt (DE)**

Lagergehäuse

Die vorliegende Erfindung bezieht sich auf ein wahlweise sowohl für ein Fest- als auch ein Loslager verwendbares Lagergehäuse, das in seiner Gehäusebohrung ein Wälzlager aufnimmt und von außerhalb des Lagergehäuses betätigbare Mittel aufweist, durch die der Außenring des Wälzlagers im Bedarfsfall in axialer Richtung festlegbar ist.

In der Regel sind für die radiale Lagerung einer Welle zwei Lager notwendig, die in ein oder zwei getrennte Gehäuse eingebaut werden. Um die Welle eindeutig axial führen zu können, wird dabei ein Lager als »Festlager« ausgebildet, das sowohl auf der Welle als auch im Gehäuse seitlich festgelegt ist.

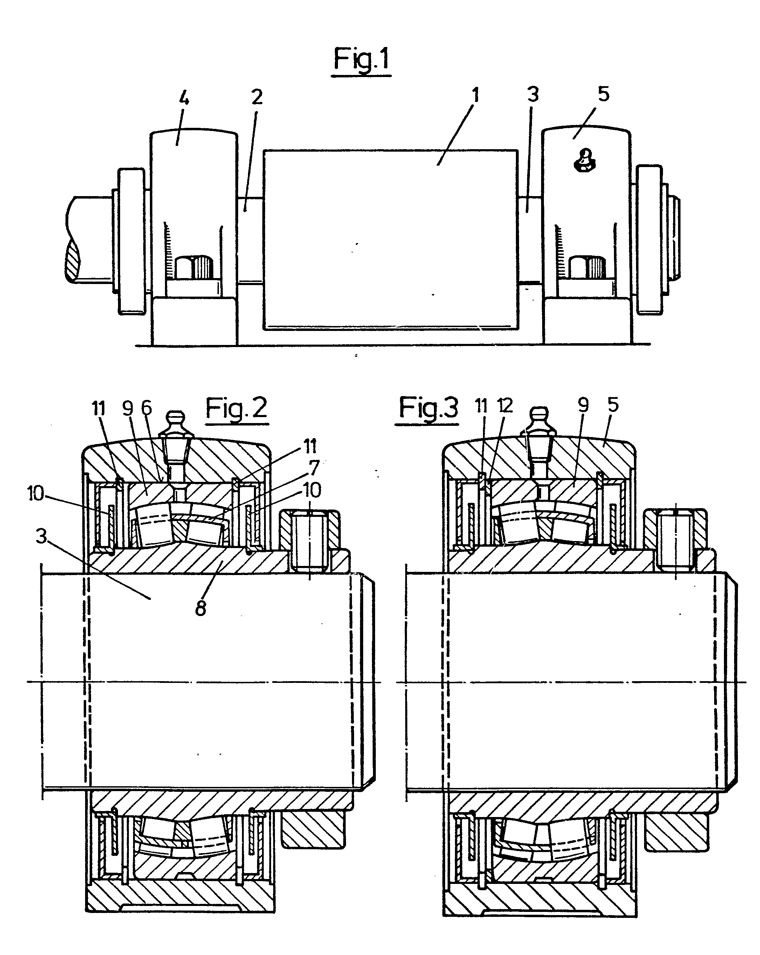

Das zweite Lager hat nur die Aufgabe der radialen Führung und wird deshalb als »Loslager« auf einer Sitzfläche — vorzugsweise im Gehäuse — verschiebbar angeordnet. Auf diese Weise können Ausdehnungen der Welle, z. B. aufgrund von Temperaturänderungen, aufgenommen werden. Bei der Verwendung von Lagergehäusen, beispielsweise Steh- oder Flanschlagergehäusen, die in einem gewissen Abstand zueinander angeordnet werden, werden, um nicht zwei verschiedene Gehäuse für das Fest- und das Loslager vorsehen zu müssen, im Regelfall die Gehäuse in ihrer Grundform für die Verwendung als Loslagergehäuse ausgebildet, wobei zur Schaffung eines Festlagers ein oder mehrere sogenannte Festringe eingebaut werden. Durch Einlegen dieser Festringe in die Bohrung der Gehäuse wird das einzubauende Lager axial fixiert, also das Festlager geschaffen. Eine solche bekannte Anordnung ist in den Figuren 1 bis 3 der beiliegenden Zeichnung beschrieben, wobei Figur 1 die Gesamtanordnung, Figur 2 das Loslager und Figur 3 das Festlager zeigt. In Figur 3 ist der Zwischenraum zwischen der Stirnseite des Lagers und dem eingesetzten Befestigungsring 11 durch den Festring 12 ausgefüllt. Solche Lagereinheiten werden bereits vom Hersteller komplett zusammengebaut und geschmiert geliefert. In der Praxis hat es sich als Nachteil erwiesen, daß die Umwandlung eines Fest- in ein Loslager und umgekehrt aufwendig und ungünstig ist, weil es der Entfernung der äußeren Dichtung bedarf. Diese Umwandlung hat auch den Nachteil, daß das Schmiermittel in der Lagereinheit verschmutzt wird. Ein weiterer Nachteil liegt darin, daß besondere Vorratshaltungen erforderlich sind, die die Herstellungskosten erhöhen.

Neben dieser bekannten Ausbildung mit sogenannten Festringen ist es auch bekannt, bei Gehäusen, bei denen die axialen Anschläge im Bereich der Bohrung durch lose Bordringe erzeugt werden, den losen Bordringen verschiedene Querschnitte zu geben. So kann der Bordring für ein Festlager beispielsweise als massiver Ring rechteckigen Querschnitts ausgebildet werden, während der Bordring für ein Loslager als im Querschnitt L-förmiger Ring ausgebildet ist (US-A-3 520 580). Diese bekannte Ausführung hat den Nachteil, daß diese Einheit nicht bereits vom Hersteller aus komplett zusammengebaut und geschmiert geliefert werden kann.

Es ist ferner ein wahlweise als Fest- und Loslager verwendbares Lagergehäuse bekannt, das in seiner Gehäusebohrung ein Wälzlager aufnimmt und von außerhalb des Lagergehäuses betätigbare Mittel aufweist, durch die der Außenring des Wälzlagers im Bedarfsfall in axialer Richtung festlegbar ist (US-A-2 397 703). Bei dieser bekannten Ausführung sind keinerlei Haltemittel zur Begrenzung der axialen Verschiebung des Wälzlagers — bei der Verwendung als Loslager — vorgesehen, so daß die Gefahr besteht, daß sich das Wälzlager unbegrenzt im Gehäuse verschiebt und dabei so weit aus dem Gehäuse geschoben wird, daß wegen ungenügender Abstützlänge einerseits keine ausreichende Fläche zur Kraftübertragung und andererseits keine genau fluchtende Lage zur Gehäusebohrung mehr gewährleistet ist. Im Extremfall kann das Lager sogar ganz aus dem Gehäuse herausgeschoben werden. Ein weiterer Nachteil der bekannten Ausführung liegt auch darin, daß der Wälzlageraußenring breiter als das Gehäuse ist, so daß die Mantelfläche des Wälzlagers über das Gehäuse übersteht. Im Betrieb kann sich auf die überstehenden Abschnitte Schmutz oder dgl. festsetzen, der eine einwandfreie Verschiebung des Loslagers verhindert.

Schließlich ist es noch zur axialen Festlegung eines Wälzlagers in einer Gehäusebohrung bekannt geworden, einen radial verformbaren Ring mittels mehrerer am Umfang verteilter in axialen Bohrungen eingesetzter Madenschrauben mit kegeligen Flächen durch axiales Verschieben der Madenschrauben an diesen Stellen radial nach innen in eine Ringnut im Außenring des Wälzlagers einzupressen (US-A-2 443 501). Mit dieser bekannten Ausführung soll das Wälzlager in axialer Richtung fixiert werden. Eine wahlweise Ausbildung als Loslager ist nicht beabsichtigt.

Die vorliegende Erfindung hat sich die Aufgabe gestellt, ein Lagergehäuse zu schaffen, das ohne große Änderungen und Aufwand wahlweise sowohl für ein Fest- als auch ein Loslager eingesetzt werden kann, wobei jedoch bei der Verwendung als Loslager die Verschiebemöglichkeiten in beiden axialen Richtungen begrenzt und die aufeinander gleitenden Flächen geschützt sind.

Diese Aufgabe wird dadurch gelöst, daß zu beiden Seiten des Außenringes des Wälzlagers in der Lagergehäusebohrung Haltemittel zur Begrenzung der axialen Verschiebung des Wälzlagers gegenüber dem Lagergehäuse vorgesehen sind und daß als Haltemittel mindestens auf einer Seite des Außenringes ein in einer verbreiterten Ringnut in der Gehäusebohrung und durch von außerhalb des Lagergehäuses betätigbare Mittel axial verschiebbar angeordneter Befestigungsring dient.

Mit diesen Merkmalen wird erreicht, daß der Außenring des Wälzlagers jederzeit über seine ganze Breite durch die Gehäusebohrung abgestützt und auch abgedeckt ist, so daß neben einer eindeutigen axialen Begrenzung der Verschiebemöglichkeit keine Gefahr besteht, daß sich das Wälzlager nicht ausreichend abstützt oder gar schiefstellt oder daß sich auf den Schiebeflächen Schmutz oder dgl. festsetzt, der eine Verschiebung behindert.

Der Befestigungsring ist in einer Ringnut eingesetzt, die breiter ausgebildet ist als der Befestigungsring, und ist durch die von außen betätigbaren Mittel in der Ringnut des Lagergehäuses axial verschiebbar.

Als von außen betätigbares Mittel kann nach einem weiteren Merkmal der Erfindung eine Schraube dienen, die die Lage des Befestigungsringes so ändert, daß dieser zur Anlage an der Stirnseite des Außenringes kommt und somit diesen in axialer Richtung festlegt.

Anstelle der Schraube in einer Bohrung des Gehäuses kann nach einem weiteren Merkmal der Erfindung in der Lagergehäusebohrung eine weitere Ringnut zur Aufnahme eines von der Stirnseite des Lagergehäuses her einzusetzenden Befestigungsringes oder dgl. vorgesehen werden, wobei dieser nach dem Einsetzen mittelbar oder unmittelbar gegen den Befestigungsring anliegt und damit den Lageraußenring in axialer Richtung fixiert.

Das kann beispielsweise auch durch eine oder mehrere am Umfang der Stirnseite des Lagergehäuses angeordnete winkelförmige Laschen oder dgl. geschehen, die mit einem Schenkel in axialer Richtung gegen den Befestigungsring gerichtet sind.

Schließlich ist es auch möglich, zwischen den von außen betätigbaren Mitteln zur Festlegung des Außenringes und dem Befestigungsring ein Zwischenelement, z. B. eine Dichtscheibe oder dgl. anzuordnen.

Weitere Einzelheiten der Erfindung sollen anhand der in den beigefügten Zeichnungen dargestellten Ausführungsbeispiele näher beschrieben werden. Gleiche Teile sind dabei jeweils mit den gleichen Bezugsziffern bezeichnet. Es zeigt

Fig. 1 eine Seitenansicht einer typischen Lageranordnung für eine rotierende Trommel oder dgl. mit zwei Stehlagergehäusen,

Fig. 2 einen Querschnitt durch ein bekanntes Stehlagergehäuse mit einer Loslageranordnung,

Fig. 3 einen Querschnitt durch ein bekanntes Stehlagergehäuse mit einer Festlageranordnung,

Fig. 4 bis 7 Teilquerschnitte durch ein erfindungsgemäßes Lagergehäuse mit verschiedenen Möglichkeiten zur Ausbildung der Mittel zur Festlegung des Außenringes und

Fig. 8 einen Teil einer Seitenansicht eines Gehäuses nach Fig. 7.

In Fig. 1 ist eine Trommel 1 dargestellt, die über die Wellenzapfen 2 und 3 in Stehlagergehäusen 4 und 5 gelagert ist.

Bei den bisher üblichen Lagergehäusen (nach Fig. 2 und 3) ist in der Gehäusebohrung 6 ein Wälzlager 7 angeordnet, das aus einem Innenring 8, der auf dem Wellenzapfen 2 bzw. 3 befestigt ist, und einem Außenring 9, der in der Gehäusebohrung 6 des Lagergehäuses 4 bzw. 5 angeordnet ist, und einem zwischen den Lagerringen angeordneten Wälzkörpersatz besteht. Zu beiden Seiten der Wälzlager 7 sind Labyrinthdichtungen 10 und Befestigungsringe 11 vorgesehen. Der Abstand der Befestigungsringe 11 bei der Ausführung nach Fig. 2 ist größer als die Breite des Außenringes 9, so daß das Wälzlager 7 eine begrenzte axiale Bewegungsmöglichkeit im Gehäuse hat. Dies ist das sogenannte »Loslager«, das erforderlich ist, um der Lageranordnung eine gewisse Bewegungsmöglichkeit aufgrund von Temperaturänderungen od. dgl. zu geben.

Bei der Ausführung nach Fig. 3 ist auf einer Seite zwischen der Stirnfläche des Außenringes 9 und der gegenüberliegenden Stirnfläche des Befestigungsringes 11 ein weiterer Ring, der sogenannte Festring 12, angeordnet. Dadurch ist der Außenring 9 gegenüber dem Gehäuse 5 in axialer Richtung festgelegt. Bei dieser Anordnung handelt es sich um das sogenannte »Festlager«.

Bei diesen bekannten Ausführungen ist es nicht ohne Entfernung mindestens eines Teiles der Labyrinthdichtung 10 und eines der Befestigungsringe 11 möglich, das Loslager durch Einbringen eines Festringes 12 in ein Festlager und umgekehrt durch Entfernen des Festringes 12 von einem Festlager in ein Loslager umzuwandeln. Abgesehen von einer möglichen Beschädigung der zu entfernenden Teile besteht die Gefahr, daß Schmiermittel aus dem Lagergehäuse austritt oder Verunreinigungen in das Lagergehäuse eintreten können.

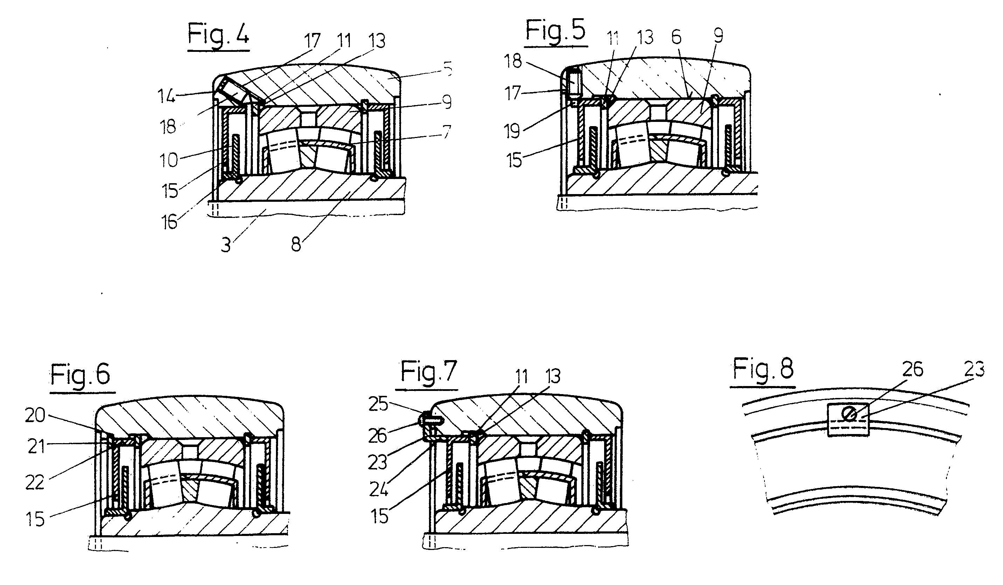

Bei den Ausführungsbeispielen nach den Fig. 4 bis 7 ist in ähnlicher Weise in einem Stehlagergehäuse 5 ein Wälzlager 7 angeordnet, das mit seinem Innenring 8 auf einem Wellenzapfen 3 und mit seinem Außenring 9 in der Gehäusebohrung 6 angeordnet ist. Die Gehäusebohrung 6 ist mit Ringnuten 13 versehen, in die die Befestigungsringe 11 eingesetzt sind. Das Lagergehäuse 5 ist hier ebenfalls durch beidseitig angeordnete Labyrinthdichtungen 10 abgedichtet.

Die Labyrinthdichtung 10 zu beiden Seiten des Lagergehäuses besteht aus einer äußeren Dichtscheibe 15, die in die Gehäusebohrung 6 des Stehlagergehäuses 5 eingepreßt ist, sowie einer Schleuderscheibe 16, die auf einer Schulter des Innenringes 8 angeordnet ist.

Beim Ausführungsbeispiel nach Fig. 4 ist eine der Ringnuten 13 zur Aufnahme eines Befestigungsringes 11 breiter als die Dicke dieses Befestigungsringes 11 ausgeführt. Schräg von außen her ist in Richtung auf diese Ringnut 13 eine Bohrung 17 im Stehlagergehäuse 5 vorgesehen, in die eine Madenschraube 18 eingeschraubt ist. Diese Madenschraube kommt mit ihrer Spitze am Befestigungsring 11 zur Anlage, wobei durch weiteres Einschrauben der Madenschraube 18 der Befestigungsring 11 gegen den Außenring 9 und dieser gegen den zweiten Befestigungsring 11 gedrückt wird. Auf diese Weise erfolgt eine axiale Fixierung des Außenringes und damit die Schaffung einer Festlagereinheit. Wird die Madenschraube 18 zurückgedreht, dann kann sich der Befestigungsring 11 in der Ringnut 13 und damit auch der Außenring 9 des Wälzlagers in axialer Richtung verschieben. Somit entsteht eine Loslagereinheit. Um leicht unterscheiden zu können, ob der Außenring axial festgelegt oder frei verschiebbar angeordnet ist, wird das Stehlagergehäuse 5 im Bereich der Außenfläche 14 der Bohrung 17 abgeschrägt.

In Fig. 5 ist eine Ausbildung ähnlich der in Fig. 4 dargestellt. Das Stehlagergehäuse 5 weist in der Gehäusebohrung 6 ebenfalls eine verbreiterte Ringnut 13 zur Aufnahme eines Befestigungsringes 11 auf. Die Bohrung 17 für die Aufnahme einer Madenschraube 18 ist hier radial von außen und in axialer Richtung außerhalb des Bereiches der Ringnut 13 angeordnet. Zwischen der Bohrung 17 und der verbreiterten Ringnut 13 ist die äußere Dichtscheibe 15 der Labyrinthdichtung 10 vorgesehen. Die Madenschraube 17 weist an ihrer Spitze einen zylindrischen Ansatz 19 auf, der an der Seitenfläche der äußeren Dichtscheibe 15 zur Anlage kommt. Auf diese Weise wird die äußere Dichtscheibe 15, der Befestigungsring 11 und der Außenring 9 axial fixiert.

Selbstverständlich kann auch bei dieser Ausführung eine Loslageranordnung geschaffen werden. Zu diesem Zweck wird die Madenschraube 18 so weit zurückgeschraubt, daß ihr zylindrischer Ansatz 19 nicht mehr in die Gehäusebohrung 6 hineinreicht. Unter Einfluß der Axialkraft kann nunmehr der Außenring den Befestigungsring 11 bis zum Anschlag an die äußere Seitenfläche der Ringnut 13 verschieben. Dabei wird auch die äußere Dichtscheibe 15 axial nach außen verschoben.

In Fig. 6 ist eine Anordnung ähnlich der nach Fig. 5 dargestellt. Hierbei ist jedoch keine Schraube oder dgl. zur axialen Fixierung des Befestigungsringes 11 in der verbreiterten Ringnut 13 vorgesehen, sondern die Gehäusebohrung weist eine weitere Ringnut 20 auf, in die ein weiterer Befestigungsring 21 eingesetzt ist. Dieser von außen zugängliche Befestigungsring 21 wird zur Schaffung einer Festlagereinheit in die Ringnut 20 eingesetzt, wobei vorher die äußere Dichtscheibe 15 mit dem Befestigungsring 11 in der verbreiterten Ringnut 13 und dem Außenring 9 des Lagers in axialer Richtung gegen den zweiten Befestigungsring 11 verschoben wurde. Hier, ebenso wie beim Ausführungsbeispiel nach Fig. 5, muß der axiale Schenkel 22 der äußeren Dichtscheibe 15 eine ganz bestimmte Länge aufweisen, damit dem Außenring 9 des Wälzlagers jede axiale Bewegungsmöglichkeit genommen wird. Die Umwandlung dieser Ausführung in ein Loslager geschieht in einfacher Weise dadurch, daß der Befestigungsring 21 aus der Ringnut 20 entfernt wird. Der Außenring 9 des Wälzlagers 7 hat nun die Möglichkeit, den in der verbreiterten Ringnut 13 angeordneten Befestigungsring 11 in axialer Richtung so weit zu verschieben, bis er zur Anlage an der äußeren Seitenfläche der verbreiterten Ringnut 13 kommt. Bei dieser Verschiebung wird auch die äußere Dichtscheibe 15 mit nach außen geschoben.

In den Fig. 7 und 8 ist eine gegenüber dem Ausführungsbeispiel nach Fig. 6 abgewandelte Ausführung gezeigt. Hier dient zur axialen Festlegung des in der verbreiterten Ringnut 13 befindlichen Befestigungsringes 11 eine oder mehrere am Umfang verteilte winkelförmige Laschen 23, deren axialer Schenkel 24 gegen die äußere Dichtscheibe 15 und damit gegen den in der verbreiterten Ringnut 13 befindlichen Befestigungsring 11 anliegt, während dessen mit einer Bohrung versehener radialer Schenkel 25 mittels einer Befestigungsschraube 26 an der Stirnseite des Stehlagergehäuses 5 befestigt ist. Diese beschriebene Festlageranordnung kann in einfacher Weise in eine Loslageranordnung umgewandelt werden, indem die Befestigungsschraube 26 gelöst und die winkelförmige Lasche 23 entfernt wird. Der Außenring 9 hat nunmehr wieder die Möglichkeit, sich in axialer Richtung so weit zu verschieben, bis der Befestigungsring 11 in der verbreiterten Ringnut 13 zur Anlage an der äußeren Seitenfläche dieser Ringnut gelangt.

Bei den Ausführungen nach Fig. 4 und 5 ist nur eine Schraube gezeigt. Es ist jedoch ohne weiteres möglich, mehrere solcher Schrauben am Umfang verteilt vorzusehen.

Obwohl vorstehend Ausführungen von Stehlagereinheiten beschrieben wurden, ist es ohne weiteres möglich, die Erfindung auf andere Gehäuseanordnungen, z. B. Flanschlagergehäuse, zu übertragen.

## Patentansprüche

1. Wahlweise sowohl als Fest- als auch als Loslager verwendbares Lagergehäuse (4, 5), das in seiner Gehäusebohrung ein Wälzlager (7) aufnimmt und von außerhalb des Lagergehäuses betätigbare Mittel aufweist, durch die der Außenring (9) des Wälzlagers im Bedarfsfall in axialer Richtung festlegbar ist, dadurch gekennzeichnet, daß zu beiden Seiten des Außenringes (9) des Wälzlagers (7) in der Gehäusebohrung (6) Haltemittel (11) zur Begrenzung der axialen Verschiebung des Wälzlagers (7) gegenüber dem Lagergehäuse (4, 5) vorgesehen sind und daß als Haltemittel mindestens auf einer Seite des Außenringes (9) ein in einer verbreiterten Ringnut (13) in der Gehäusebohrung (6) und durch von außerhalb des Lagergehäuses (4, 5) betätigbare Mittel (18, 21, 23) axial verschiebbar angeordneter Befestigungsring (11) dient.

2. Lagergehäuse nach Anspruch 1, dadurch gekennzeichnet, daß der Befestigungsring (11) durch eine von außen betätigbare Schraube (18) in der Ringnut (13) des Lagergehäuses (4, 5) axial verschiebbar angeordnet ist.

3. Lagergehäuse nach Anspruch 1, dadurch gekennzeichnet, daß in der Gehäusebohrung (6) eine weitere Ringnut (20) zur Aufnahme eines von der Stirnseite des Lagergehäuses (4, 5) her einzusetzenden Befestigungsringes (21) oder dgl. vorgesehen ist, wobei dieser nach dem Einsetzen mittelbar oder unmittelbar gegen den Befestigungsring (11) anliegt.

4. Lagergehäuse nach Anspruch 1, dadurch gekennzeichnet, daß an der Stirnseite des Lagergehäuses (4, 5) ein oder mehrere am Umfang verteilte winkelförmige Laschen (23) befestigt sind, deren axiale(n) Schenkel (24) gegen den Befestigungsring (11) gerichtet sind.

5. Lagergehäuse nach einem der Ansprüche 1 bis 4, dadurch gekennzeichnet, daß zwischen den von außen betätigbaren Mitteln (18, 21, 23) und dem Befestigungsring (11) ein Zwischenelement, z. B. eine Dichtscheibe (15), angeordnet ist.


## Claims

1. Bearing housing (4, 5) alternatively usable both as locating bearing housing as well as floating bearing housing accomodating in its bore a rolling bearing (7) and having actuating means accessible from outside the bearing housing to locate the outer ring (9) of the rolling bearing in axial direction if need be, characterized in that retaining elements (11) are arranged in the housing bore (6) at both sides of the outer ring (9) of the rolling bearing (7) to limit the axial displacement of the rolling bearing (7) relative to the bearing housing (4, 5), and in that the retaining element is a locating ring (11) arranged at least at one side of the outer ring (9) and disposed in an enlarged annular groove (13) in the housing bore (6) where it can be axially displaced by actuating means (18, 21, 23) accessible from outside the bearing housing (4, 5).

2. Bearing housing as claimed in claim 1, characterized in that the locating ring (11) can be axially displaced in the annular groove (13) of the bearing housing (4, 5) by a screw (18) accessible from the outside.

3. Bearing housing as claimed in claim 1, characterized in that the housing bore (6) is provided with a further annular groove (20) to accommodate a locating ring (21) or similar element to be mounted from the face side of the bearing housing (4, 5), the locating ring (21) abutting after mounting either indirectly or directly the locating ring (11).

4. Bearing housing as claimed in claim 1, characterized in that the face of the bearing housing (4, 5) is provided with one or more angle fittings (23) the axial flange(s) (24) of which is (are) extending towards the locating ring (11).

5. Bearing housing as claimed in any of the claims 1 to 4, characterized in that an intermediate element such as a sealing washer (15) for example, is arranged between the actuating means (18, 21, 23) accessible from the outside, and the locating ring (11).


## Revendications

1. Palier (4, 5) facultativement utilisable aussi bien comme palier fixe que comme palier libre, renfermant dans son alésage un roulement (7) et comportant de moyens d'actionnement accessibles de l'extérieur du palier pouvant arrêter, si besoin est, la bague extérieure (9) du roulement (7) en direction axiale, caractérisé par le fait que d'organes de fixation (11) sont disposés dans l'alésage de palier (6) de chaque côté de la bague extérieure (9) du roulement (7) pour limiter le déplacement axial du roulement par rapport au palier (4, 5), et que l'organe de fixation disposé d'un côté au moins de la bague extérieure (9) est une bague de fixation (11) insérée dans une rainure circulaire élargie (13) dans l'alésage de palier (6) où elle peut être déplacée par de moyens d'actionnement (18, 21, 23) accessibles de l'extérieur du palier (4, 5).

2. Palier suivant la revendication 1, caractérisé par le fait que la bague de fixation (11) est disposée dans une rainure circulaire (13) du palier (4, 5) de manière à pouvoir être déplacée axialement par une vis (18) accessible de l'extérieur.

3. Palier suivant la revendication 1, caractérisé par le fait que l'alésage de palier (6) est pourvu d'une autre rainure circulaire (20) destinée à recevoir une bague de fixation (21) ou organe similaire à monter par la face du palier (4, 5), cette bague de fixation portant après son montage indirectement ou directement sur la bague de fixation (11).

4. Palier suivant la revendication 1, caractérisé par le fait que la face du palier (4, 5) comporte une ou plusieurs attaches angulaires (23) réparties sur la circonférence dont la (les) branche(s) axiale(s) (24) s'étend(ent) en direction de la bague de fixation (11).

5. Palier suivant l'une quelconque des revendications 1 à 4, caractérisé par le fait qu'un organe intercalaire, par exemple une rondelle d'étanchéité (15), est disposé entre les moyens d'actionnement (18, 21, 23) accessibles de l'extérieur, et la bague de fixation (11).

Fig.1

Fig.2

Fig.3

Fig.5

Fig.4

Fig.8

Fig.7

Fig.6